(19) **Europäisches Patentamt / European Patent Office / Office européen des brevets**

(11) **EP 2 059 832 B1**

(12) **FASCICULE DE BREVET EUROPEEN**

(45) Date de publication et mention
de la délivrance du brevet:
**30.12.2015 Bulletin 2015/53**

(21) Numéro de dépôt: **07823787.2**

(22) Date de dépôt: **07.09.2007**

(51) Int Cl.:
*G01S 15/89* (2006.01)     *G01V 1/38* (2006.01)
*G01S 7/521* (2006.01)

(86) Numéro de dépôt international:
**PCT/FR2007/051891**

(87) Numéro de publication internationale:
**WO 2008/029068 (13.03.2008 Gazette 2008/11)**

(54) **SONAR A ANTENNE DEFORMABLE ET PROCEDE ASSOCIE DE TRAITEMENT DU SIGNAL POUR FORMER UNE ANTENNE SYNTHETIQUE**

**SONAR MIT VERFORMBARER ANTENNE UND ENTSPRECHENDES SIGNALVERARBEITUNGSVERFAHREN ZUR HERSTELLUNG EINER SYNTHETISCHEN ANTENNE**

**SONAR WITH DEFORMABLE ANTENNA AND ASSOCIATED METHOD OF SIGNAL PROCESSING TO FORM A SYNTHETIC ANTENNA**

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.09.2006 FR 0653647**

(43) Date de publication de la demande:
**20.05.2009 Bulletin 2009/21**

(73) Titulaire: **IXBLUE**
**78160 Marly-le-Roi (FR)**

(72) Inventeurs:
• **JEAN, Frédéric**
**F-83136 Meounes Les Montrieux (FR)**
• **COTTREAU, Yann**
**F-83330 Le Beausset (FR)**

(74) Mandataire: **Michelet, Alain et al**
**Cabinet HARLE et PHELIP**
**14-16, rue Ballu**
**75009 Paris (FR)**

(56) Documents cités:
**EP-A2- 0 600 242     FR-A1- 2 729 041**
**FR-A1- 2 769 372     US-A- 4 930 111**
**US-A- 5 117 400**

• **HUANG Y ET AL: "Synthetic aperture sonar movement stimation -the adaptive kalman filter approach", NEURAL NETWORKS AND SIGNAL PROCESSING, 2003. PROCEEDINGS OF THE 2003 I NTERNATIONAL CONFERENCE ON NANJING, CHINA DEC. 14-17, 2003, PISCATAWAY, NJ, USA, IEEE, vol. 1, 14 December 2003 (2003-12-14), pages 830-833, XP010692969, DOI: 10.1109/ICNNSP.2003.1279404 ISBN: 978-0-7803-7702-8**

# Description

La présente invention a pour domaine celui de l'imagerie sonar en milieu marin. Plus particulièrement, l'invention porte sur un sonar amélioré et un procédé associé de traitement du signal.

Il est connu « d'éclairer » le fond marin dont on souhaite obtenir une image ou une cible sous-marine que l'on souhaite repérer avec une impulsion acoustique, puis d'écouter le signal temporel généré par la réverbération de l'impulsion acoustique émise.

Pour cela, il est connu d'utiliser un appareil sous-marin, ou poisson, tracté par un bâtiment de surface. Les flancs du poisson portent respectivement des sonars, dit latéraux. L'antenne acoustique de chacun des ces sonars latéraux est formée par une rangée d'une pluralité de transducteurs fonctionnant en réception, associés à au moins un transducteur fonctionnant en émission. Lors d'une plongée pour réaliser une image d'un fond marin, le poisson navigue de telle sorte qu'il soit positionné par exemple à une trentaine de mètres au dessus du fond pour imager jusqu'à une portée de 300 mètres. De façon plus générale, le poisson navigue à une altitude au dessus du fond qui correspond à environ 10% de la distance maximale d'observation. Chaque sonar latéral permet alors l'observation d'une bande de terrain qui se défile en long parallèlement à la trajectoire de déplacement du poisson et en large, dans un plan vertical transversal à la trajectoire du poisson, à l'intérieure d'un secteur angulaire ayant pour origine le sonar et s'étendant généralement entre 30° et 80° par rapport à la verticale.

Or, la résolution d'un sonar dépend, à une fréquence de travail donnée, essentiellement de la longueur de l'antenne de réception. Pour améliorer la résolution des sonars, il s'est donc agit, dans un premier temps, d'augmenter la longueur de leur antenne. Mais, l'augmentation de la longueur de l'antenne est limitée par la taille du poisson support. Il est ainsi difficile d'aller au-delà d'une antenne de l'ordre de 3 m du fait de l'encombrement du poisson à bord du navire de surface, et surtout des difficultés de mise à l'eau et de récupération de ce poisson. Différents moyens d'allongement de l'antenne ont donc été proposés.

Le document FR2738918 divulgue un système sonar à ouverture synthétique qui, par un dispositif et un procédé de traitement du signal, permet de disposer d'une antenne virtuelle plus grande que l'antenne physique, par exemple environ 30 m pour l'antenne virtuelle alors que l'antenne physique mesure environ 3 m.

Cependant, ce dispositif et ce procédé conduisent à une limitation de la vitesse du porteur qui doit rester inférieure à la moitié de la longueur d'antenne par récurrence, typiquement 5 noeuds pour 2 m d'antenne et 300 m de portée.

Ainsi, le document US-5747724 divulgue un système sonar destiné aux études sismiques, dont l'antenne, initialement ramassée à l'intérieur du corps d'un moyen de traction sous-marin, peut être déployée et traînée derrière le moyen de traction qui lui-même peut être remorqué par un navire de surface. L'antenne est constituée par une série de détecteurs acoustiques connectés entre eux par un câble support. A l'extrémité avant de l'antenne, un boîtier télémétrique est relié par un câble de communication au moyen de traction. Ce boîtier télémétrique comporte l'électronique nécessaire au multiplexage des signaux provenant de chacun des détecteurs acoustiques et à la retransmission du signal multiplexé vers le moyen de traction, via le câble de communication. A l'extrémité arrière de l'antenne, du côté opposé au moyen de traction, une ancre flottante, dont la traînée est importante, permet de tendre le câble support de l'antenne lorsque le moyen de traction se déplace, de sorte que les détecteurs acoustiques sont maintenus dans une position relative rigide, essentiellement vers l'arrière, le long de la trajectoire du moyen de traction.

Le document US-5747724 divulgue un sonar à antenne pliable, permettant effectivement de ne plus avoir à recourir à l'utilisation d'un poisson support et donc de réduire l'encombrement du système, de simplifier les opérations de mise à l'eau et de pourvoir construire une antenne de grande taille ayant théoriquement une très bonne résolution.

Cependant, lors du déplacement du moyen de traction le long d'une trajectoire, l'antenne décrite ne peut être considérée comme un solide. Cette antenne n'a pas réellement une forme rectiligne constante au cours du temps, contrairement à l'hypothèse qui est faite dans le document US-5747724. Ainsi, chaque détecteur acoustique est animé de mouvements instantanés qui l'écarte de la trajectoire suivie. La conséquence de ces mouvements est une dégradation des propriétés du sonar par rapport à celles attendues, et en particulier une faible résolution, ce qui peut être acceptable pour des applications comme la recherche sismique, où la longueur d'onde de travail est de l'ordre de ou plus grande que 10 cm, mais n'est pas acceptable pour des longueurs d'ondes plus faibles comme celles utilisées pour les sonars latéraux.

On connaît également par US-5 117 400 une antenne tractée de capteurs avec calibration optique qui permet de compenser les déformations de l'antenne et par US 4 930 111 un calculateur à corrélation de superposition pour antenne synthétique.

L'intérêt d'un sonar à antenne déformable étant reconnu, Il y a donc un besoin d'un tel système sonar à antenne déformable amélioré permettant de résoudre les problèmes mentionnés ci-dessus et en particulier permettant effectivement d'atteindre de grandes résolutions.

Pour cela l'invention a pour objet un système sonar selon la revendication 1.

Dans un mode de réalisation la position instantanée d'un récepteur est donnée par trois coordonnées de positionnement et trois coordonnées angulaires d'orientation.

De préférence l'antenne déformable comporte plus de 24 récepteurs et à une longueur supérieure ou égale à 2m.

L'invention a également pour objet un procédé d'imagerie sonar selon la revendication 4.

Avantageusement, selon la présente invention, les positions de chacun des transducteurs de l'antenne déformable sont déterminées en temps réel. A partir de ces informations, des moyens de traitement du signal adaptés reconstruisent une image équivalente à celle que l'on pourrait obtenir au moyen d'une antenne linaire rigide d'une taille équivalente.

L'invention sera mieux comprise et d'autres buts, détails, caractéristiques et avantages de celle-ci apparaîtront plus clairement au cours de la description d'un mode de réalisation particulier de l'invention donné uniquement à titre illustratif et non limitatif en référence aux dessins annexés. Sur ces dessins :

   Les Figures 1A-C sont des représentations schématiques de la partie matérielle du système sonar selon l'invention dans trois modes de réalisations différents ;
   La figure 2 est une représentation géométrique de la situation physique prise en compte par le procédé de traitement du signal selon l'invention ;

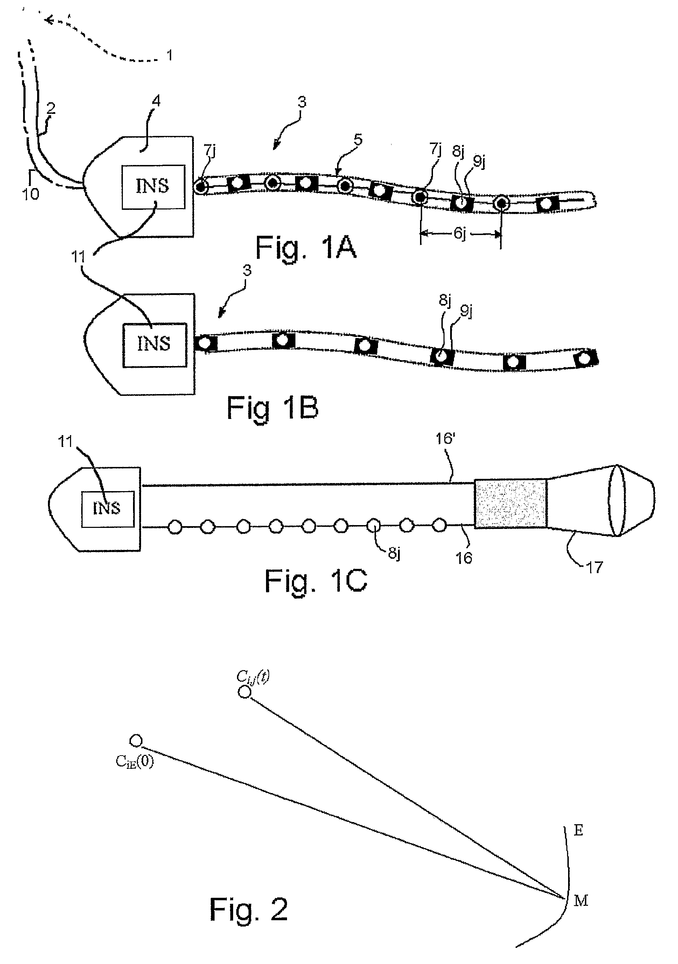

Comme cela est représenté sur la figure 1A, un navire de surface 1 tracte, au moyen d'un câble 2, un sonar 3 à antenne déformable. Le sonar 3 comporte une tête 4 et une antenne déformable 5.

Selon le premier mode de réalisation représenté sur la figure 1A, l'antenne souple 3 est formée d'une pluralité de N sections $6_j$ couplées les unes à la suite des autres par autant de rotules $7_j$ de jonction. Chaque section $6_j$ est munie d'un transducteur $8_j$ ainsi que de l'électronique bas niveau $9_j$ associée permettant l'émission et/ou la réception d'un signal acoustique dans le milieu environnant. La communication depuis l'électronique $9_j$ d'une section $6_j$ donnée vers la tête 4, ou bien depuis la tête 4 vers au moins une électronique $9_j$ d'une section $6_j$ donnée, est possible grâce à présence de moyens de communication adaptés. De préférence ces moyens de communication sont des câbles électriques, mais, en variante, pourraient être des fibres optiques ou un moyen de communication par ondes électromagnétiques ou acoustiques de faible portée entre des moyens d'émission/réception sur la tête 4 et des moyens d'émission/réception équipant chacune des sections $6_j$.

Le sonar 3 est en communication, montante et descendante, avec le navire de surface 1 via un ombilical 10. Dans ce cas, la tête 4 du sonar ne comporte que des moyens permettant d'émettre les informations collectées depuis les différentes sections $6_j$ vers le navire de surface 1, éventuellement en les amplifiant, et d'émettre les signaux descendants depuis le navire de surface 1 vers, par exemple, la section $6_j$ correspondante.

Dans ce premier mode de réalisation, la tête 4 du sonar 3 est également équipée d'une centrale inertielle 11. La centrale inertielle 11 permet, en mesurant des accélérations linéaires et des vitesses angulaires de rotation, la détermination, à chaque instant, la position de la tête 4 : trois coordonnées de positionnement d'un point de référence, tel que le centre de gravité de la tête 4, et trois coordonnées angulaire d'attitude d'un repère lié à la tête 4 par rapport à un référentiel inertiel de référence.

Par ailleurs, chaque rotule $7_j$ entre deux sections $6_{j-1}$ et $6_j$ consécutives est instrumentée de manière à mesurer les trois angles correspondant aux trois degrés de liberté entre les deux sections considérées. Les différents capteurs angulaires placés au niveau des rotules $7_j$ mesurent une information angulaire instantanée, d'angle ou de vitesse angulaire, qui est communiquée, grâce au moyen décrit précédemment, vers la tête 4 du sonar 3.

On notera que, dans des variantes de réalisation, la rotule $7_j$ peut avoir moins de degré de liberté. Par exemple, la rotule peut être une liaison de type pivot dont l'axe est orienté pour être sensiblement verticale au cours de l'utilisation du sonar 3. En conséquence de quoi, le nombre d'angles et/ou de vitesses angulaires instantanés à mesurer est réduit. Par exemple, dans le cas d'une liaison pivot, un unique angle et/ou une unique vitesse angulaire doit être mesuré à chaque instant pour connaître le position relative de la section $6_j$ par rapport à la section $6_{j-1}$.

Les informations générées par la centrale inertielle ainsi que les différentes informations angulaires provenant de chaque rotule $7_j$ sont transmises le long de l'ombilical 10 vers le bateau de surface 1 où des moyens de calcul adaptés 15 permettent un traitement de l'information selon un procédé qui va être décrit en détail ci-après.

Les moyens de calcul 15 comportent une unité de calcul et une unité de mémorisation. L'unité de mémorisation stocke la valeur de différentes variables ou paramètres ainsi que des instructions de différents programmes aptes à être exécutées par l'unité de calcul. Dans le mode de réalisation le plus préférable, parmi les différents programmes mémorisés, il existe un programme permettant une mise oeuvre de la méthode de traitement du signal selon l'invention.

De manière simplifiée, on comprend que la centrale inertielle 11 permet de connaître précisément la position par exemple du centre de gravité de la tête 4 du sonar 3 et l'orientation de celle-ci dans un repère inertiel ayant pour origine le centre de gravité. Une translation d'une longueur connue le long d'une direction également connue permet de déterminer la position de la rotule $7_1$ reliant la tête à l'extrémité côté tête de l'antenne déformable 5. A partir des informations angulaires données par les capteurs placés sur la rotule $7_1$, on détermine la position et l'orientation instantanées de la section $6_1$ et du transducteur $8_1$. On détermine également la position instantanée de la rotule $7_2$. De manière itérative, les informations angulaires données par les capteurs placés

sur la rotule $7_2$ permettent de déterminer la position et l'orientation instantanées de la section $6_2$ et du transducteur $8_2$, ainsi que la position de la rotule $7_3$. De proche en proche, la position et l'orientation instantanées de chacun des transducteurs sont déterminées.

Ainsi, au cours de la réception du signal d'écho réfléchi par un relief du fond marin par exemple, les formes instantanées successives de l'antenne sont entièrement déterminées. Le signal temporel reçu par chacun des capteurs $8_i$ est alors traité compte tenu de cette succession de formes instantanées. En conséquence, selon l'invention, on prend en compte les positions instantanés de l'antenne pour générer l'image du fond marin.

De manière plus détaillée, le système sonar fonctionne de manière périodique. Pour une portée maximale de 300 mètres, chaque récurrence de fonctionnement est séparée par une durée d'environ 400 millisecondes. Au cours d'une récurrence, l'antenne émet d'abord un pulse acoustique ayant une fréquence typique de 100 kHz et une durée très courte de l'ordre de 10 ms. Puis, pendant le reste de la récurrence, l'antenne fonctionne en récepteur et écoute l'onde acoustique réverbérée par le sol du fond marin ou des objets sous-marins. Pendant ce fonctionnement en récepteur, l'antenne se déforme. Chaque section $6_i$ a légèrement changée de position, ce qui influe sur le signal temporel détecté par le transducteur $8_i$ associé. Il faut donc traiter le signal mesuré pour séparer les contributions provenant de la source de l'écho, d'une part, et du déplacement du transducteur générant ledit signal, d'autre part.

A chaque récurrence i d'une série de R récurrences requises pour la formation d'une antenne synthétique, et à chaque capteur j sur les N capteurs formant l'antenne physique souple, sont associés un signal temporel $S_{i,j}(t)$ et une position $C_{i,j}(t)$, où t varie de 0 à T, ou T est la durée d'une récurrence.

Le signal $S_{i,j}(t)$ est la somme de toutes les contributions de la partie du fond marin insonifiée :

$$S_{i,j}(t) = \int_{M \in E} P_M$$

avec M un point appartenant à l'intersection du fond marin et de l'ellipsoïde. Cette ellipsoïde est définie par les foyers $C_{iE}(0)$, position de l'émetteur E à t = 0 c'est-à-dire au moment de l'émission, et $C_{i,j}(t)$, position du jième récepteur à l'instant t, ainsi que la contrainte sur la position $C_{i,j}(t)$ traduite par la relation suivante entre les distances (cf. figure 2) :

$$d(C_{i,E}(0), M) + d(C_{i,j}(t), M) = c * t$$

où c est la vitesse de propagation du son dans l'eau de mer.

La contribution $P_M$ de chaque point M est principalement un déphasage et une modulation d'amplitude du signal émis $S_E$ :

$$P_M = A_M \cdot e^{j\varphi_M} \cdot S_E$$

La modulation d'amplitude $A_M$ est spécifique au point M, alors que le déphasage $\varphi_M$ dépend de la position relative du point d'émission $C_{i,E}(0)$, du point de réflexion M et du point de détection $C_{i,j}(t)$.

Le traitement a pour but de calculer la modulation d'amplitude $A_M$ pour chaque point M du sol et de l'afficher sur un écran, de l'enregistrer ou tout autre utilisation. Pour cela, on corrige d'abord en phase chaque signal $S_{i,j}(t)$ en compensant le déphasage, qui est une fonction du temps, généré par le trajet du signal entre la position de l'émetteur à l'instant de l'émission et la position du détecteur j à l'instant t. Ce déphasage instantané est connu grâce à la connaissance des points $C_{iE}(0)$, $C_{i,j}(t)$ et M. On obtient en sortie des signaux corrigés en phase $S'_{i,j}(t)$.

Puis, dans un second temps, on évalue la modulation d'amplitude $A_M$ à partir des interférences constructives et destructives de ces signaux corrigés en phase $S'_{i,j}(t)$.

Bien que l'invention ait été décrite en référence à un mode de réalisation particulier, elle n'est nullement limitée à ce mode de réalisation. Elle comprend tous les équivalents techniques des moyens décrits ainsi que leurs combinaisons qui entrent dans le cadre de l'invention.

Ainsi, la figure 1B représente une variante dans laquelle les différentes sections de l'antenne sont insérées à l'intérieur d'un tube ou gaine 15. Ce tube peut être rempli d'un gel permettant un bon transfert de l'énergie acoustique depuis l'extérieur vers les transducteurs ou vis versa. Dans ce cas l'antenne déformable est souple. Les capteurs permettant de connaître la position instantanée du transducteur correspondant sont positionnés à proximité des récepteurs. La déformée de l'antenne peut être approchée avec plus de précision par une forme polynomiale extrapolant les positions instantanées mesurées par les différents capteurs. En conséquence, le nombre de capteurs nécessaires pour déterminer la déformée instantanée de l'antenne est réduit.

Sur la figure 1C, une flûte est constituée par un câble inférieur 16 et un câble supérieur 16' fixés à une tête 4. Les différents transducteurs sont portés par le câble inférieur 16 servant de support. Une ancre flottante 17 fixée à l'extrémité de la flûte permet, lorsque la tête est mise en mouvement par traction, de tendre la flûte. La déformée instantanée de l'antenne est déterminée par l'utilisation d'un moyen de positionnement précis de l'ancre flottante 17 par rapport à la tête 4 sans avoir besoin d'un instrumentation de chacune des transducteurs.

Bien évidemment, cette antenne déformable peut être utilisée sur plusieurs récurrences pour la formation d'une antenne synthétique. En particulier, l'utilisation d'une antenne physique de grande longueur permet d'augmenter la vitesse de déplacement du sonar. En effet, dans la synthèse d'antenne, il faut que la partie arrière de l'antenne physique à la récurrence suivante coïncide avec la partie avant de l'antenne physique à la récurrence précédente. Ce recouvrement partiel de l'antenne physique entre deux récurrences successives permet de corréler les signaux obtenus et de synthétiser une antenne. En conséquence, il faut qu'entre deux récurrences successives, la vitesse de déplacement de l'antenne ne soit pas supérieure à la moitié de la longueur de l'antenne que divise la période T d'une récurrence. Au moyen des antennes de l'art antérieur, la vitesse maximale de déplacement est d'environ 4 noeuds. Selon l'invention, en mettant à disposition des antennes physiques ayant de grandes dimensions, la vitesse de déplacement de l'antenne pour faire de la synthèse peut être augmentée. L'utilisation d'une telle antenne permet donc de réaliser la cartographie d'un site non seulement de manière pus précise mais également en un temps beaucoup plus court.

**Revendications**

1. Système sonar (3) comportant

   - une antenne physique (5) ; et
   - une unité de calcul (15) ;
   - ladite antenne physique (5) étant déformable et comportant une pluralité de récepteurs acoustiques (8j) de positions variables les uns par rapport aux autres, ledit système (3) étant équipé de moyens de positionnement permettant de déterminer, en temps réel, la position instantanée de chacun des récepteurs acoustiques (8j), et ladite unité de calcul (15) permettant de reconstruire une image sonar en tenant compte des positions instantanées de chaque récepteur acoustique (8j) ;
   - le système (3) comportant au sein de l'antenne physique (5) au moins un émetteur acoustique ; le système (3) étant **caractérisé en ce que**
   - l'antenne physique (5) est reliée à l'arrière d'une tête tractée (4), ladite tête (4), étant munie d'une centrale inertielle (11) apte à déterminer la position et l'orientation instantanées de ladite tête (4) et l'antenne physique (5) étant équipée de capteurs permettant de déterminer une position instantanée relative de l'émetteur acoustique et de chaque récepteur acoustique (8j) par rapport à la tête (4), l'antenne physique (5) étant formée d'une pluralité de sections couplées les unes à la suite des autres par autant de rotules de jonction (7j), chaque rotule de jonction (7j) étant instrumentée, lesdits capteurs étant des capteurs angulaires mesurant une information angulaire instantanée entre deux sections considérées; et **en ce que**
   - ladite unité de calcul (15) permet de former une antenne synthétique en considérant une succession de récurrences de fonctionnement du système sonar (3).

2. Système selon la revendication 1, **caractérisé en ce que** ladite position instantanée d'un récepteur acoustique (8j) est donnée par trois coordonnées de positionnement et trois coordonnées angulaires d'orientation.

3. Système selon la revendication 1 ou la revendication 2, **caractérisé en ce que** ladite antenne physique (5) comporte plus de 24 récepteurs acoustiques (8j) et a une longueur supérieure ou égale à 2 mètres.

4. Procédé d'imagerie sonar pour le traitement d'une pluralité de signaux temporels respectivement obtenus en sortie d'une pluralité de récepteurs acoustiques (8j) d'une antenne physique (5) lors de détection de la réflexion d'au moins une onde émise par un émetteur acoustique, lesdits signaux temporels étant collectés par une unité de calcul (15) apte à mettre en oeuvre ledit procédé; **caractérisé en ce que**

   - ledit procédé est mis en oeuvre dans un système sonar (3) selon l'une quelconque des revendications précédentes, ladite antenne physique (5) étant une antenne déformable ayant en son sein un émetteur, ladite antenne physique (5) étant reliée à l'arrière d'une tête tractée (4), ladite tête (4) étant munie d'une centrale inertielle (11) apte à déterminer la position et l'orientation instantanées de ladite tête (4) et l'antenne physique (5) étant équipée de capteurs permettant de déterminer une position instantanée relative de l'émetteur acoustique et de chaque récepteur acoustique (8j) par rapport à la tête (4); **en ce que**
   - ledit procédé comporte une étape de détermination, en temps réel, de la position instantanée de chaque récepteur de ladite pluralité de récepteurs acoustiques (8j) et la position dudit émetteur acoustique au moment de l'émission, puis une étape de compensation, à chaque instant, de la phase de chaque signal temporel de la variation de phase due aux mouvements de l'émetteur acoustique et du récepteur acoustique (8j) générant ledit signal de manière à déterminer une pluralité de signaux temporels corrigés, et une étape de détermination de la modulation d'amplitude d'un point à imager en fonction des interférences constructives et destructives des différents signaux temporels corrigés entre eux; et **en ce que**

- lesdits signaux temporels sont associés non seulement à chaque récepteur acoustique (8j), mais également à chaque récurrence de fonctionnement du système sonar de sorte que l'on forme une antenne synthétique.

**Patentansprüche**

1. Sonarsystem (3) mit

   - einer physischen Antenne (5) und
   - einer Recheneinheit (15),
   - wobei die physische Antenne (5) verformbar ist und eine Mehrzahl akustischer Empfänger (8) mit zueinander veränderbaren Positionen aufweist, wobei das System mit Positioniermitteln ausgestattet ist, die ermöglichen, in Echtzeit die momentane Position jedes der akustischen Empfänger (8j) zu bestimmen, und wobei die Recheneinheit (15) ermöglicht, ein Sonarbild unter Berücksichtigung der momentanen Position jedes der akustischen Empfänger (8j) zu rekonstruieren,
   - wobei das System (3) in der physischen Antenne (5) wenigstens einen akustischen Sender aufweist,
   wobei das System (3) **dadurch gekennzeichnet ist, daß**
   - die physische Antenne (5) mit der Rückseite eines geschleppten Kopfes (4) verbunden ist, wobei der Kopf (4) mit einer Trägheitszentrale (11) ausgestattet ist, die geeignet ist, die momentane Position und die momentane Orientierung des Kopfes (4) zu bestimmen, und die physische Antenne (5) mit Sensoren bestückt ist, die ermöglichen, eine momentane relative Position des akustischen Senders und jedes der akustischen Empfänger (8j) in Bezug auf den Kopf (4) zu bestimmten, wobei die physische Antenne (5) aus einer Mehrzahl von mittels einer gleich großen Zahl von Gelenkverbindungen (7j) fortlaufend aneinander gekoppelten Abschnitten gebildet ist, wobei jede Gelenkverbindung (7j) instrumentiert ist, wobei die Sensoren Winkelsensoren sind, die eine momentane Winkelinformation zwischen zwei jeweiligen Abschnitten messen, und daß
   - die Recheneinheit (15) ermöglicht, durch Einbeziehen einer Folge wiederholten Funktionierens des Sonarsystems eine synthetische Antenne zu bilden.

2. Sonarsystem gemäß Anspruch 1, **dadurch gekennzeichnet, daß** die momentane Position eines akustischen Empfängers (8j) durch drei Positionskoordinaten und drei Orientierungswinkelkoordinaten gegeben ist.

3. Sonarsystem gemäß Anspruch 1 oder Anspruch 2, **dadurch gekennzeichnet, daß** die physische Antenne (5) mehr als 24 akustische Empfänger (8j) aufweist und eine Länge von mehr als oder gleich 2 m hat.

4. Sonarbildverfahren zum Verarbeiten einer Mehrzahl zeitlicher Signale, die jeweils am Ausgang einer Mehrzahl akustischer Empfänger (8j) einer physischen Antenne (5) bei der Erfassung der Reflexion wenigstens einer von einem akustischen Sender ausgestrahlten Welle erhalten werden, wobei die zeitlichen Signale durch eine Recheneinheit (15) gesammelt werden, die geeignet ist, das besagte Verfahren durchzuführen, **dadurch gekennzeichnet, daß**

   - das besagte Verfahren in einem Sonarsystem (3) nach einem der vorangehenden Ansprüche durchgeführt wird, wobei die physische Antenne (5) eine verformbare Antenne ist, die einen Sender beinhaltet, wobei die physische Antenne (5) mit der Rückseite eines geschleppten Kopfes (4) verbunden ist, wobei der Kopf (4) mit einer Trägheitszentrale (11) ausgestattet ist, die geeignet ist, die momentane Position und die momentane Orientierung des Kopfes (4) zu bestimmen, und die physische Antenne (5) mit Sensoren bestückt ist, die ermöglichen, eine momentane relative Position des akustischen Senders und jedes der akustischen Empfänger (8j) in Bezug auf den Kopf (4) zu bestimmen, daß
   - das Verfahren einen Schritt zum Bestimmen in Echtzeit der momentanen Position jedes Empfängers der Mehrzahl akustischer Empfänger (8j) und der Position des akustischen Senders zum Zeitpunkt der Ausstrahlung, sowie einen Schritt zum zu jeder Zeit erfolgenden Ausgleichen der Phasenvariation der Phase des zeitlichen Signals aufgrund der Bewegungen des akustischen Senders und des akustischen Empfängers (8j) aufweist, wobei das Signal dergestalt gebildet wird, daß eine Mehrzahl korrigierter zeitlicher Signale bestimmt wird, und einen Schritt zum Bestimmen der Amplitudenmodulation eines abzubildenden Punkts in Abhängigkeit von konstruktiven und destruktiven Interferenzen zwischen den verschiedenen korrigierten zeitlichen Signalen aufweist, und daß
   - die zeitlichen Signale nicht nur jedem akustischen Empfänger (8j), sondern auch jedem wiederholten Funktionieren des Sonarsystems zugeordnet werden, um eine synthetische Antenne zu bilden.

## Claims

1. A sonar system (3) comprising:

   - a physical antenna (5) ; and
   - a calculation unit (15);
   said physical antenna (5) being deformable and comprising a plurality of acoustic receivers (8j) having variable positions relative to each other, said system (3) being equipped with positioning means making it possible to determine, in real time, the instantaneous position of each of the acoustic receivers (8j), and said calculation unit (15) making it possible to reconstruct a sonar image by taking account of instantaneous positions of each acoustic receiver (8j), the system (3) comprising at least one acoustic transmitter inside the physical antenna (5); the system (3) being **characterized in that**

   - the physical antenna (5) is connected to the rear of a towed head (4), said head (4) being provided with an inertial unit (11) adapted to determine the instantaneous position and orientation of said head (4) and **in that** the physical antenna (5) is equipped with sensors making it possible to determine a relative instantaneous position of the acoustic transmitter and of each acoustic receiver (8j) with respect to the head, the physical antenna (5) being formed of a plurality of sections coupled one after the other by as many ball joints (7j), each ball joint (7j) being instrumented, said sensors being angular sensors measuring an instantaneous angular information between two considered sections, and **in that**
   - said calculation unit (15) makes it possible to form a synthetic antenna by considering a succession of operation recurrences of the sonar system (3).

2. The system according to claim 1, **characterized in that** said instantaneous position of an acoustic receiver (8j) is given by three positioning coordinates and three angular orientation coordinates.

3. The system according to claim 1 or claim 2, **characterized in that** said physical antenna (5) includes more than 24 acoustic receivers (8j) and has a length greater than or equal to 2 meters.

4. Method of sonar imaging for processing a plurality of time signals obtained at the output of a plurality of acoustic receivers (8j) of a physical antenna (5) during the detection of the reflection of at least one wave emitted by an acoustic transmitter, said time signals being collected by a calculation unit (15) adapted to implement said method, **characterized in that**

   - said method is implemented in a sonar system (3) according to any one of the preceding claims, said physical antenna (5) being a deformable antenna including at least one acoustic transmitter, said physical antenna (5) being connected to the rear of a towed head (4), said head (4) being provided with an inertial unit (11) adapted to determine the instantaneous position and orientation of said head (4) and the physical antenna (5) being equipped with sensors making it possible to determine a relative instantaneous position of the acoustic transmitter and of each acoustic receiver (8j) with respect to the head (4); and **in that**
   - said method comprises a step of determining, in real time, the instantaneous position of each receiver of said plurality of acoustic receivers (8j) and the position of said acoustic transmitter at the time of emission, then a step of compensating, at each instant of time, the phase of each time signal for the phase variation due to the movements of the acoustic transmitter and of the acoustic receiver (8j) generating said signal, so as to determine a plurality or corrected time signals, and a step of determining the amplitude modulation of a point to be imaged according to the mutual constructive and destructive interferences of the different corrected time signals, and **in that**
   - said time signals are associated not only with each acoustic receiver (8j), but also with each operation recurrence of the sonar system, whereby a synthetic antenna is formed.

Fig. 1A

Fig 1B

Fig. 1C

Fig. 2

**EP 2 059 832 B1**

## RÉFÉRENCES CITÉES DANS LA DESCRIPTION

**Documents brevets cités dans la description**

- FR 2738918
- US 5747724 A
- US 5117400 A
- US 4930111 A